# EUROPEAN PATENT APPLICATION

(11) **EP 1 962 476 A2**
(43) Date of publication of application: **27.08.2008**
(21) Application number: 08151183.4
(22) Date of filing: 07.02.2008
(51) Int. Cl.: H04L 29/12

(54) **Computer and control method thereof**

(30) Priority: 21.02.2007 KR 20070017615
(71) Applicant: SAMSUNG ELECTRONICS CO., LTD., Suwon-si Gyeonggi-do 442-742 (KR)
(72) Inventor: Liu, Zheng-Ian, Giheung-gu, Yongin-si Gyeonggi-do (KR)
(74) Representative: Robinson, Ian Michael

(57) **Abstract**

A computer to include a plurality of memories (111, 112) which respectively stores unique identifiers (IDs); a communication unit (120) which communicates to another computer based on the unique IDs stored in the plurality of memories (111, 112); and a controller (130) to examine the unique IDs stored in the plurality of memories (111, 112), select one of the unique IDs when the unique IDs stored in the plurality of memories (111, 112) are different from each other, and store the selected unique ID in the plurality of memories (111, 112). The computer and method provide for a more stable unique ID as a unique ID stored in a memory not managed by an operating system of the computer is preferentially selected.

## Description

### BACKGROUND OF THE INVENTION

### 1. Field of the Invention

Aspects of the present invention relate to a computer and a control method thereof, and more particularly, to a computer that uses a unique identifier (ID), and a control method thereof.

### 2. Description of the Related Art

A computer uses a unique ID as identification information so that each computer may communicate with other computers. The unique ID includes an Internet protocol (IP) address, a media access control (MAC) address, and a universal unique identifier (UUID) or a global unique identifier (GUID).

The UUID represents a unique ID generated by a program so as to assign a unique identification to an object, such as a Word document. The UUID has a configuration of 128 bits, and is generated by combining a media access control (MAC) address and an ID value of other hardware in use in a computer, and a current time. The UUID may not be uniquely generated; however, the possibility of generating the same number twice is very low if a proper algorithm is provided as 2^128 = 3.4028× 10^38 numbers are available.

Since the IP address mainly used as an identifier in a network can be easily changed, it may be inappropriate to use the IP address as unique identification information. The UUID counteracts such a problem and can provide a worldwide unique ID. The UUID can be stored in both an operating system and hardware that supports the UUID. For example, the UUID can be stored in a registry of Windows and a memory of an Intel Active Management Technology (AMT) chip provided in a computer motherboard. According to the AMT, hardware and software information is stored in a non-volatile memory so that the information can be managed when the computer is turned off. Further, a remote console does not depend on a local software agent so that unwanted data loss can be prevented.

However, when the operating system is reinstalled or the registry is damaged, the UUID stored in the operating system may be deleted or changed. In addition, the UUID stored in the AMT chip may be deleted or damaged due to replacement of the motherboard or due to the actions of malicious software (e.g., a virus).

When a UUID stored in the operating system and a UUID stored in the memory of the AMT chip are different from each other due to any reason, an error may occur in the system so that a new UUID must be generated as the existing UUID cannot be used.

### SUMMARY OF THE INVENTION

According to the present invention there is provided a computer and a control method as set forth in the appended claims. Other features of the invention will be apparent from the dependent claims, and the description which follows.

It is an aspect of the present invention to provide a computer and a control method thereof more stably and effectively using a unique ID.

Aspects of the present invention provide a computer and a control method thereof improving problems that UUIDs stored in a plurality of memories are damaged or volatilized.

According to an aspect of the present invention, a computer includes: a plurality of memories which selectively stores unique identifiers (IDs); a communication unit which performs communication based on the unique IDs stored in the plurality of memories; and a controller which examines the unique IDs stored in the plurality of memories, selects one of the unique IDs when the unique IDs stored in the plurality of memories are different from each other, and stores the selected unique ID in the plurality of memories.

According to an aspect of the invention, the plurality of memories includes a first memory that is managed by an operating system and a second memory that is not managed by the operating system, and the controller examines the unique IDs stored in the plurality of memories, and stores a unique ID stored in the second memory that is not managed by the operating system in the first memory if the unique IDs stored in the plurality of memories are different from each other.

According to an aspect of the invention, the controller examines the unique IDs stored in the plurality of memories, generates a new unique ID if no unique ID is stored in the plurality of memories, and stores the new unique ID in the respective memories.

According to an aspect of the invention, the controller examines the unique IDs stored in the plurality of memories, and if a unique ID exists in only one of the plurality of memories, the controller stores the unique ID in the memory where the unique ID is not stored.

The foregoing and/or other aspects of the present invention are achieved by providing a method for controlling a computer having a plurality of memories, the method including: examining unique IDs stored in the plurality of memories; selecting one of the unique IDs if the unique IDs stored in the plurality of memories are different from each other; and storing the selected unique ID in the respective memories.

Additional aspects and/or advantages of the invention will be set forth in part in the description which follows and, in part, will be obvious from the description, or may be learned by practice of the invention.

### BRIEF DESCRIPTION OF THE DRAWINGS

These and/or other aspects and advantages of the invention will become apparent and more readily appreciated from the following description of the embodiments, take in conjunction with the accompanying drawings, in which:
FIG. 1 is a block diagram of a computer according to aspects of the present invention; and
FIG. 2 is a flowchart of an operational process of the computer according to aspects of the present invention.

### DETAILED DESCRIPTION OF THE EMBODIMENTS

Reference will now be made in detail to the present embodiments of the present invention, examples of which are illustrated in the accompanying drawings, wherein like reference numerals refer to the like elements throughout. The embodiments are described below in order to explain the present invention by referring to the figures.

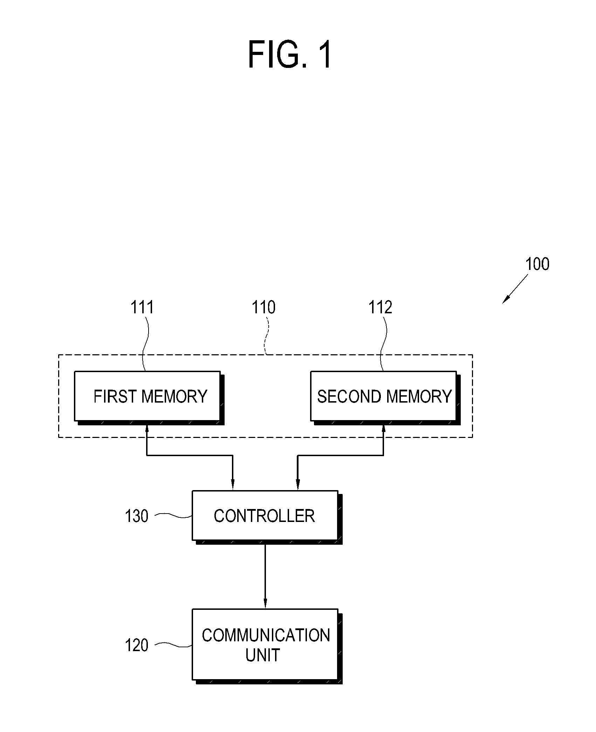

FIG. 1 is a block diagram of a computer according to aspects of the present invention. A computer 100 may store a unique identifier (ID) in a plurality of memories. As shown in FIG. 1, the computer 100 includes at least a plurality of memories 110, a communication unit 120, and a controller 130. The plurality of memories 110 includes a first memory 111 and a second memory 112. The plurality of memories 110 selectively stores a unique ID. Although the computer 100 is illustrated as comprising only the above-listed features, the computer 100 is not limited thereto such that the computer 100 may also include multiple processors, memories, displays, communication unit, controllers, etc. Further, the plurality of memories 110 is illustrated as only including the first memory 111 and the second memory 112; however, the plurality of memories 110 is not limited thereto such that the plurality of memories 110 may include many multiples of memories or partitions of memories, can be detachable from the computer 100, and the memories may be volatile or not. Further, the computer can be a portable or nonportable computer, and can also be implemented in a portable media player, telephone, and/or personal digital assistant.

In addition, the plurality of memories 110 may include a first memory 111 that is managed by an operating system, and a second memory 112 that is not managed by the operating system. The unique ID is an ID that is used as identification information of each computer 100 when each computer 100 communicates with another computer (not shown). For example, the unique ID may be a UUID, the first memory 111 may be a registry of Windows, and the second memory 112 may be a memory of an AMT chip. In this example, the registry of the Windows is the first memory 111 managed by the operating system, and the memory of the AMT chip is the second memory 112 that is not managed by the operating system. The registry of the Windows is provided in a hard disk, and the AMT chip memory is provided in a non-volatile memory of the AMT chip.

Each memory 111, 112 included in the plurality of memories 110 may or may not have a unique ID. For example, a UUID registered in Windows may be deleted or changed when Windows is reinstalled or the registry is damaged. In addition, a UUID stored in the AMT chip memory may be deleted or changed when a main board or mother board is replaced or affected by malicious software (e.g., virus).

The communication unit 120 communicates with other computers (not shown) using the unique IDs stored in the plurality of memories 110 as identification information. For example, the communication unit 120 may include a local area network (LAN) card or software to communicate with another computer, and may use the UUID as a unique ID to communicate with the other computer. Similarly, the communication unit 120 can use the UUID for other cards, such as wireless area network (WAN) cards or any of the wired and/or wireless protocols.

The controller 130 examines unique IDs stored in the plurality of memories 110, selects one unique ID from the unique IDs stored in the plurality of memories 110 if the unique IDs are different from each other, and stores the selected unique ID in the respective memories 111, 112 in the plurality of memories 110. The controller 130 examines whether a unique ID is stored in each of the memories 111, 112 included in the plurality of memories 110. Further, the controller 130 examines whether the unique ID stored in each memory 111, 112 is a dummy value or whether the unique ID stored in each memory 111, 112 corresponds to a predetermined format of the unique ID. When the unique IDs stored in the respective memories 111, 112 are determined to be different from the unique IDs stored in the other respective memories 111, 112 as a result of the examination, the controller 130 stores a unique ID of one memory 111, 112 in the other memory. The controller 130 may include an operating system of a computer, an application that uses a UUID, and a basic input/output system (BIOS).

For example, when UUIDs stored in the first memory 111 and the second memory 112 are different from each other and both of the UUIDs are valid, the controller 130 selects one of the two UUIDs randomly or based on priority, and stores the selected UUID in a memory where an unselected UUID is stored. Specifically, if the first memory 111 includes a first UUID, the second memory 112 includes a second UUID, and the first and second UUIDs are different, then the controller 130 selects one of the first and second UUIDs randomly or based on priority. If the first UUID is selected, the controller 130 stores the first UUID in the second memory 112. If the second UUID is selected, the controller 130 stores the second UUID in the first memory 111.

For another example, if the first memory 111 includes a first UUID, the second memory 112 includes a second UUID, and the controller 130 recognizes the first UUID as a dummy value, then the controller 130 can store the second UUID in the first memory 111. Or, if the controller 130 recognizes the first UUID as being damaged, invalid, or corrupted, then the controller 130 can store the second UUID in the first memory 111.

Hereinafter, the first memory 111 will be used interchangeably with the memory that is controlled by the operating system of the computer, i.e., the Windows registry. Further, the second memory 112 will be used interchangeably with the memory of the AMT chip memory. As such, the element numbers of the first and second memories 111 and 112 will be used in conjunction with the Windows registry 111 and the AMT chip memory 112.

The controller 130 examines the unique IDs stored in the plurality of memories 110 and stores a unique ID stored in a memory that is not managed by the operating system in each memory 111, 112 of the plurality of memories 110 when the unique IDs stored in the memories 111, 112 are different from each other. That is, the controller 130 can preferentially select a unique ID stored in the memory that is not managed by the operating system when different UUIDs are stored in the plurality of memories 111, 112 of the plurality of memories 110. The memory managed by the operating system has a higher possibility of being damaged than a memory that is not managed by the operating system. For example, if the UUID stored in the registry of the Windows 111 and the UUID stored in the AMT chip memory 112 are different from each other, the controller 130 stores the UUID stored in the AMT chip memory 112 in the registry of the Windows 111 as the AMT chip memory 112 is not managed by the operating system and is therefore more reliable.

If, as a result of examining the unique IDs stored in the plurality of memories 110, no unique IDs are found, the controller 130 generates a new unique ID to store it in each of the plurality of memories 110. For example, if it is examined that the UUIDs stored in the registry of Windows 111 and the memory of the AMT chip 112 are invalid or no UUIDs exist, the controller 130 generates a new UUID and stores the generated UUID in the registry of Windows 111 and the memory of the AMT chip 112, the first and second memories 111 and 112, respectively. UUIDs that are determined to be invalid or not valid are those UUIDs that do not correspond to a predetermined format, have been corrupted or damaged, do not exist, or are in error in any other way.

The controller 130 examines the unique IDs stored in the plurality of memories 110, and when a unique ID exists in only one of the plurality of memories 110, the controller 130 can store the existing unique ID in a memory where the unique ID does not exist. For example, when a valid UUID exists in the first memory 111 and a valid UUID does not exist in the second memory 112, the controller 130 stores the valid UUID stored in the first memory 111 in the second memory 112. When the valid UUID does not exist in the first memory 111 but does exist in the second memory 112, the controller 130 stores the valid UUID stored in the second memory 112 in the first memory 111.

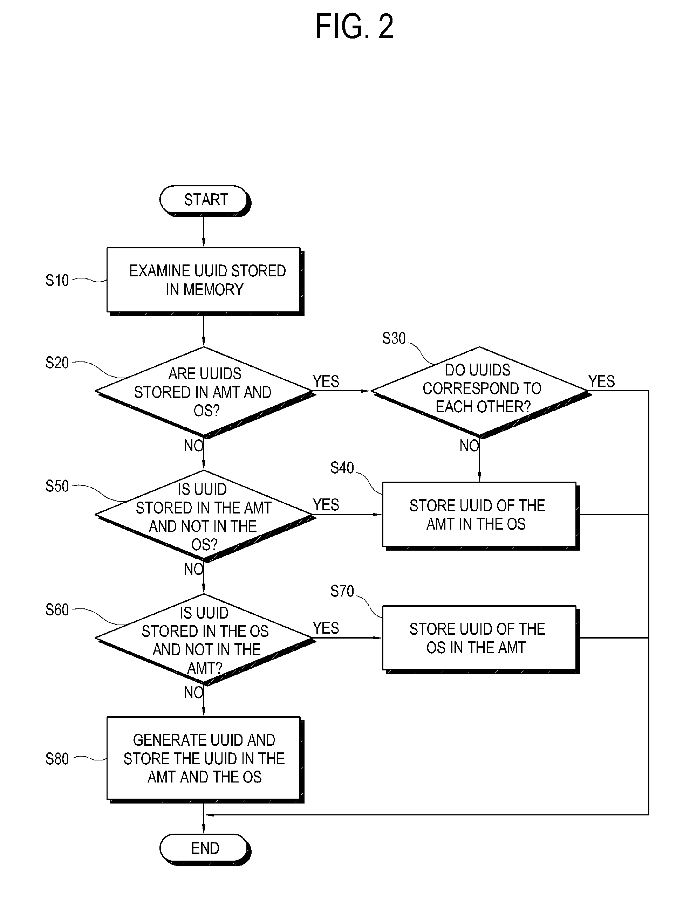

Hereinafter, a method for controlling the computer 100 according to aspects of the present invention will be described in further detail with reference to FIG. 2. The controller 130 starts examining unique IDs stored in the plurality of memories 110. That is, the controller 110 examines whether each memory of the plurality of memories 110, for example the first and second memories 111 and 112, stores a unique ID, and examines whether the unique ID corresponds to a predetermined format of the unique ID.

For example, the controller 130 determines whether UUIDs are stored in the AMT chip memory 112 and the registry of Windows 111 together in operation S20. When it is determined in the operation S20 that the UUIDs are stored in the AMT chip memory 112 and the registry of Windows 111, respectively, the controller 130 determines whether the UUIDs correspond to each other or are the same in operation S30. When it is determined that the UUIDs correspond to each other in the operation S30, the controller 130 uses the stored UUIDs and stops further operation. When it is determined in the operation S30 that the UUIDs stored in the AMT chip memory 112 and the registry of Windows 111 do not correspond to each other, the controller 130 stores the UUID stored in the AMT chip memory 112 in the registry of Windows 112 in operation S40. However, the operation S40 is not limited thereto as the controller 130 may randomly select the UUID stored in either the AMT chip memory 112 or the registry of Windows 111, or any one of the other memories in the plurality of memories 110, and store the selected UUID in the other memories in the plurality of memories 110.

When it is determined in the operation S20 that the UUIDs are not stored in both the AMT chip memory 112 and the registry of Windows 111, the controller 130 determines whether the UUID is stored in the AMT chip memory 112 as opposed to the registry of Windows 111 in operation S50. When it is determined in the operation S50 that the UUID is stored in the AMT chip memory 112 instead of the registry of Windows 111, the controller 130 performs the operation S40 to store the UUID stored in the AMT chip memory 112 in the registry of Windows 111.

If the condition of operation S50 is not satisfied meaning that the UUID is not stored in the AMT chip memory 112, the controller 130 determines whether the UUID is stored in the registry of Windows 111 instead of the AMT chip memory 112 in operation S60. When it is determined in the operation S60 that the UUID is stored in the registry of Windows 111 and not stored in the AMT chip memory 112, the controller 130 stores the UUID stored in the registry of Windows 111 in the AMT chip memory 112 in operation S70.

If the condition of operation S60 is not satisfied meaning that the UUID is not stored in the registry of Windows 111 (as determined in operation S60) and that the UUID is not stored in the AMT chip memory 112 (as determined in operation S50), the controller 130 generates a new UUID and stores the new UUID in the AMT chip memory 112 and the registry of Windows 111 in operation S80. That is, when no UUID is stored in the AMT chip memory 112 and the registry of Windows 111, the controller 130 generates a new UUID to be stored in the AMT chip memory 112 and the registry of Windows 112.

Although the above-described method illustrates the use of first and second memories 111 and 112, the method is not limited thereto. For example, the operations of the method may be repeated so as to accommodate many memories or partitions of memories included in the plurality of memories 110. Further, when the plurality of memories 110 comprises many memories, an order in which the controller 130 selects valid UUIDs from the many memories may be established such that the controller 130 selects a more reliable and stable UUID.

As described above, a computer 100 and a control method of more stably and effectively using a unique ID can be provided according to aspects of the present invention. As such, the controller determines the integrity of the unique IDs and can randomly or preferentially select a more stable unique ID for a computer. Furthermore, the controller 130 may preferentially select a more stable unique ID for the computer 100 based on other factors such as a length of time that a particular unique ID has not been changed or a number of times that the particular unique ID has been previously selected.

Various components of the above described computer and method of control thereof, as shown in FIG. 1 and FIG. 2, such as the controller 130, the plurality of memories 110, the registry of Windows 111 and the AMT chip memory 112, can be integrated into a single control unit, or alternatively, can be implemented in software or hardware, such as, for example, an application specific integrated circuit (ASIC). As such, it is intended that the processes described herein be broadly interpreted as being equivalently performed by software, hardware, or a combination thereof. Such software modules can be written, via a variety of software languages, including C, C++, Java, Visual Basic, and many others. These software modules may include data and instructions which can also be stored on one or more machine-readable storage media, such as dynamic or static random access memories (DRAMs or SRAMs), erasable and programmable read-only memories (EPROMs), electrically erasable and programmable read-only memories (EEPROMs) and flash memories; magnetic disks such as fixed, floppy and removable disks; other magnetic media including tape; and optical media such as compact discs (CDs) or digital video discs (DVDs). Instructions of the software routines or modules may also be loaded or transported into the wireless cards or any computing devices on the wireless network in one of many different ways. For example, code segments including instructions stored on floppy discs, CD or DVD media, a hard disk, or transported through a network interface card, modem, or other interface device may be loaded into the system and executed as corresponding software routines or modules. In the loading or transport process, data signals that are embodied as carrier waves (transmitted over telephone lines, network lines, wireless links, cables, and the like) may communicate the code segments, including instructions, to the network node or element. Such carrier waves may be in the form of electrical, optical, acoustical, electromagnetic, or other types of signals. The computer readable recording medium can also be distributed over network coupled computer systems so that the computer readable code is stored and executed in a distributed fashion. Also, functional programs, codes, and code segments for accomplishing the present invention can be easily construed by programmers skilled in the art to which the present invention pertains.

While there have been illustrated and described what are considered to be example embodiments of the present invention, it will be understood by those skilled in the art and as technology develops that various changes and modifications, may be made, and equivalents may be substituted for elements thereof without departing from the true scope of the present invention. Many modifications, permutations, additions, and subcombinations may be made to adapt the teachings of the present invention to a particular situation without departing from the scope thereof. Alternative embodiments of the invention can be implemented as a computer program product for use with a computer system. Such a computer program product can be, for example, a series of computer instructions stored on a tangible data recording medium, such as a diskette, CD-ROM, ROM, or fixed disk, or embodied in a computer data signal, the signal being transmitted over a tangible medium or a wireless medium, for example microwave or infrared. The series of computer instructions can constitute all or part of the functionality described above, and can also be stored in any memory device, volatile or non-volatile, such as semiconductor, magnetic, optical or other memory device.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A computer, comprising:
a plurality of memories (111, 112) which store unique identifiers IDs;
a communication unit (120) which communicates with another computer based on the unique IDs stored in the plurality of memories (111, 112); and
a controller (130) which examines the unique IDs stored in the plurality of memories (111, 112), selects one of the unique IDs when the unique IDs stored in the plurality of memories (111, 112) are different from each other, and stores the selected unique ID in each of the plurality of memories (111, 112).

2. The computer of claim 1, wherein the plurality of memories (111, 112) comprises:
a first memory (111) that is managed by an operating system of the computer; and
a second memory (112) that is not managed by the operating system,
wherein the controller (130) examines the unique IDs stored in the plurality of memories (111, 112), selects as the selected unique ID the unique ID stored in the second memory (112), and stores the selected unique ID retrieved from the second memory (112) in the first memory (111) if the unique IDs stored in the plurality of memories (111, 112) are different from the unique ID stored in the second memory (112).

3. The computer of claim 2, wherein the controller (130) examines the unique IDs stored in the first and second memories (111, 112), generates a new unique ID if no unique ID is stored in the first and second memories (111, 112), and stores the new unique ID in each of the first and second memories (111, 112).

4. The computer of claim 1, wherein the controller (130) examines the unique IDs stored in the plurality of memories (111, 112), generates a new unique ID if no unique ID is stored in the plurality of memories (111, 112), and stores the new unique ID in the respective memories of the plurality of memories (111, 112).

5. The computer of claim 4, wherein the controller (130) examines the unique IDs stored in the plurality of memories (111, 112), and if a unique ID exists in only one memory of the plurality of memories (111, 112), the controller (130) stores the unique ID in the respective memories (111, 112) in which the unique ID is not stored.

6. A method of controlling a computer having a plurality of memories (111, 112), the method comprising:
examining unique IDs stored in the plurality of memories (111, 112);
selecting one of the unique IDs if the unique IDs stored in the plurality of memories (111, 112) are different from each other; and
storing the selected unique ID in each of the memories (111, 112).

7. The method of claim 6, wherein the examining the unique IDs further comprises determining if the unique IDs are stored in the plurality of memories (111, 112).

8. The method of claim 7, wherein the examining the unique IDs further comprises determining whether the unique IDs correspond to each other.

9. The method of claim 6, the selecting further comprises preferentially selecting one of the unique IDs found during the examining the unique IDs.

10. The method of claim 9, wherein the preferentially selecting comprises selecting unique IDs stored in memories (112) not managed by an operating system of the computer before selecting the unique IDs stored in memories (111) managed by the computer.

11. The method of claim 6, further comprising generating a unique ID to store in the respective memories (111, 112) if no unique ID is found during the examining the unique IDs.

12. A computer which interacts with other computers according to a unique ID, comprising:
a first memory (111) managed by an operating system of the computer to store a first unique ID;
a second memory (112) not managed by the operating system of the computer to store a second unique ID; and
a controller (130) to examine the first and second unique IDs, to determine if the first and second unique IDs correspond to each other, and to select one of the first and second unique IDs if the first and second unique IDs do not correspond,
wherein, if the first unique ID is selected, the controller (130) stores the first unique ID in the second memory (112), and if the second unique ID is selected, the controller (130) stores the second unique ID in the first memory (111).

13. The computer of claim 12, wherein, if the first and second unique IDs are not valid, the controller (130) generates a unique ID and stores the generated unique ID in the first and second memories (111, 112).

14. The computer of claim 12, further comprising a communication unit (120) to communicate with a second computer and to use the one of the first and the second unique IDs to identify the computer to the second computer.

15. A method of controlling a computer which interacts with other computers according to a unique ID, comprising:
selecting one of a first unique ID and a second unique ID if the first unique ID and the second unique ID do not correspond, the first unique ID being stored in a first memory (111) and the second unique ID being stored in a second memory (112);
storing the first unique ID in the second memory (112), if the first unique ID is selected; and
storing the second unique ID in the first memory (111), if the second unique ID is selected.

16. The method of claim 15, wherein the first memory (111) is managed by an operating system of the computer, the second memory (112) is not managed by the operating system of the computer, and second unique ID is selected preferentially over the first unique ID.

17. The method of claim 15, further comprising generating a new unique ID if neither of the first unique ID and the second unique ID is valid.

18. The method of claim 17, wherein the first unique ID and the second unique ID are not valid if the first unique ID and the second unique ID do not exist, are corrupt or damaged, do not correspond to a predetermined format, or are in any other way in error.

19. The method of claim 15, further comprising maintaining the first unique ID in the first memory (111) and the second unique ID in the second memory (112) if the first unique ID and the second unique ID correspond.
